Europäisches Patentamt

European Patent Office

Office européen des brevets

(19)

(11) Numéro de publication: **0 329 583**
**A1**

(12) # DEMANDE DE BREVET EUROPEEN

(21) Numéro de dépôt: 89440008.4

(22) Date de dépôt: 06.02.89

(51) Int. Cl.⁴: **B 23 P 21/00**
**E 05 C 9/00**

(30) Priorité: 16.02.88 FR 8801968

(43) Date de publication de la demande:
23.08.89 Bulletin 89/34

(84) Etats contractants désignés:
AT BE CH DE ES GB IT LI LU NL SE

(71) Demandeur: FERCO INTERNATIONAL Usine de Ferrures
de Bâtiment Société à responsabilité limitée dite
2, rue du Vieux-Moulin Reding
F-57400 Sarrebourg (FR)

(72) Inventeur: Kautt, Jean-Jacques
24, Rue Pertois
F-67000 Strasbourg (FR)

(74) Mandataire: Aubertin, François
Cabinet Lepage & Aubertin Innovations et Prestations 4,
rue de Haguenau
F-67000 Strasbourg (FR)

(54) **Dispositif d'assemblage des pièces d'un renvoi d'angle.**

(57) Un dispositif d'assemblage comporte des moyens d'assemblage automatique (42) pour associer les différentes pièces d'un renvoi d'angle. Ces moyens d'assemblage automatique (42) sont constitués d'une machine d'assemblage composée, d'une part, d'un transporteur (46) avançant pas-à-pas pour présenter, au-fur-et-à-mesure, le renvoi d'angle à hauteur d'un poste d'assemblage (70, 75, 94, 99, 112) et/ou d'un ensemble de postes d'assemblage et, d'autre part, de moyens d'avancement (50, 83), de moyens pour la mise en position d'attente et/ou de mise en position active des différentes pièces (51, 52, 109) solidaires du transporteur (46), de moyens de déplacement latéral (49, 55, 56, 106), de moyens de rivetage (65, 70, 99, 112) et de moyens de contrôle (44, 69, 81, 86, 96, 102, 111), ladite machine d'assemblage comportant, en outre, en combinaison avec ces moyens, des moyens de rotation (66, 82) conférant au renvoi d'angle une succession des mouvements de rotation séquentielle pour diriger, successivement, vers le haut certaines parties dudit renvoi d'angle.

FIG. 8a

EP 0 329 583 A1

**Description**

## Dispositif d'assemblage des pièces d'un renvoi d'angle

L'invention a trait à un dispositif d'assemblage des pièces d'un renvoi d'angle composé d'une têtière en forme d'équerre formée de deux ailes perpendiculaires l'une à l'autre dont l'une présente une lumière longitudinale, d'un rail de guidage solidaire des faces internes des deux ailes, d'une première et d'une seconde plaquettes de recouvrement rendues, respectivement, solidaires des deux ailes par rivetage, d'un premier et d'un second bras de liaison reliés entre-eux par un ensemble élastique constitué de plusieurs ressorts lamellaires, d'un premier et d'un second guide-vis rendus solidaires par rivetage, respectivement, des deux ailes de la têtière et d'un élément de verrouillage traversant la lumière longitudinale de l'une des ailes de la têtière et rendu solidaire par rivetage de l'un des bras de liaison.

On connaît déja, par le document FR-A-2 589 933, une installation pour l'assemblage d'un élément de ferrure en longueur telle qu'une crémone composée d'une têtière, d'un boîtier, solidaire de cette dernière et contenant un fouillot, un pignon, éventuellement un pignon de renvoi, des douilles et des rivets d'assemblage, et d'au moins une tringle de manoeuvre pourvue d'un élément de verrouillage d'extrémité et, éventuellement d'au moins un élément de verrouillage intermédiaire. Cette installation comprend un transporteur avançant pas-à-pas, présentant au-fur-et-à-mesure, l'élément de ferrure en longueur à hauteur d' un poste d'assemblage et/ou d'un ensemble de postes d'assemblage comportant au moins un magasin de stockage des différentes pièces à assembler des moyens de prélèvement et d'acheminement des pièces depuis le magasin de stockage jusqu'a leur emplacement d'assemblage. Le transporteur pas-à-pas comporte des moyens d'avancement combinés à des moyens de déplacement située entre deux postes d'assemblage ou deux ensembles de postes d'assemblage pour conférer à l'élément de ferrure en longueur un parcours bidirectionnel pour le présenter en-dessous des postes d'assemblage et/ou des ensembles de postes d'assemblage.

Cependant, le parcours bidirectionnel est situé dans un plan horizontal et composé d'avancements rectilignes et de déplacements latéraux. De ce fait, l'assemblage des différentes pièces ne peut se faire qu'à partir d'une seule face de l'élément de ferrure en longueur

On connaît, par ailleurs, un dispositif d'assemblage des différentes pièces d'un élément de ferrure tel qu'un bras de compas. Ce dispositif comprend, pour chaque pièce à assembler, au moins un poste d'assemblage, un transporteur avançant pas-à-pas présentant l'axe longitudinal du bras de compas perpendiculairement à la ligne d'avancement devant le ou les postes d'assemblage, des moyens de déplacement latéral du bras de compas et des moyens de positionnement. En plus, ce dispositif d'assemblage comporte au moins un dispositif de retournement pour présenter vers le haut soit le recto, soit le verso du bras de compas dont l'axe longitudinal reste perpendiculaire à la ligne d'avancement.

Il s'agit donc également d'un dispositif permettant l'assemblage d'un élément de ferrure en longueur.

On connaît également une machine d'assemblage des différentes pièces d'un élément de ferrure en longueur tel qu'un ensemble formé d'une tringle de manoeuvre et d'une têtière et coopérant par l'intermédiaire d'un bras auxiliaire, avec un bras de compas solidaire du cadre dormant d'une fenêtre oscillo-battante. En plus du ou des postes d'assemblage, du transporteur avançant pas-à-pas présentant l'axe longitudinal de l'ensemble tringle de manoeuvre-têtière perpendiculairement à la ligne d'avancement devant le ou les postes d'assemblage, des moyens de déplacement latéral dudit ensemble et des moyens permettant l'assemblage des différentes pièces en provenance des différents magasins de stockage soit sur le recto, soit sur le verso dudit ensemble tringle de manoeuvre-têtière la machine d'assemblage comporte un transporteur avançant pas-à-pas pourvu des moyens de mise en position d'attente et/ou de mise en position active des différentes pièces à assembler telles que la têtière, la tringle de manoeuvre, l'axe d'articulation, le coffre anti-fausse manoeuvre, le guide-vis, les plots de verrouillage et le galet de verrouillage.

Ces moyens de mise en position d'attente et/ou de mise en position active des différentes pièces à assembler sont constitués par des taquets solidaires du transporteur avançant pas-à-pas. Ces taquets comportent, d'une part, des logements parallèles transversaux dans lesquels sont insérées les tringles de manoeuvre et les têtières et, d'autre part, des évidements dans lesquels sont logés, au-fur-et-à-mesure de l'avancement de l'assemblage, l'axe d'articulation du bras auxiliaire, le bras auxiliaire, le coffre anti-fausse manoeuvre, le guide-vis, les plots de verrouillage coopérant avec les rampes de verrouillage du bras de compas et le galet de verrouillage.

Ainsi, cette machine ne permet également que l'assemblage d'un élément de ferrure en longueur et l'assemblage des différentes pièces du renvoi d'angle ne peut se faire que manuellement.

La présente invention a pour but de remédier à cet inconvénient. L'invention telle qu'elle est caractérisée dans les revendications résout le problème consistant à créer un dispositif d'assemblage des pièces d'un renvoi d'angle composé d'une têtière, en forme d'équerre formée de deux ailes perpendiculaires l'une à l'autre dont l'une présente une lumière longitudinale, d'un rail de guidage solidaire des faces internes et des deux ailes, d'une première et d'une seconde plaquettes de recouvrement rendues, respectivement, solidaires des deux ailes par rivetage, d'un premier et d'un second bras de liaison reliés entre-eux par un ensemble élastique constitué de plusieurs ressorts lamellaires, d'un premier et d'un second guide-vis rendus solidaires par rivetage, respectivement, des deux ailes de la têtière, et d'un élément de verrouillage traversant la lumière longitudinale de l'une des ailes de la têtière et rendu solidaire par rivetage de l'un des bras de liaison, ce dispositif d'assemblage comportant des moyens d'assemblage automatique des différentes pièces du renvoi d'angle, ces moyens étant constitués par une machine d'assemblage comprenant un transporteur avançant pas-à-pas présentant, au-fur-et-à-mesure, le renvoi d'angle à hauteur d'un poste d'assemblage et/ou d'un ensemble de postes d'assemblage et composé de moyens d'avancement, de moyens pour la mise en position d'attente et/ou de mise en position active des différentes pièces solidaires du transporteur avançant pas-à-pas, de moyens de déplacement latéral, de moyens de rivetage et de moyens de contrôle, cette machine d'assemblage comportant, en outre, en combinaison avec ces moyens, d'une part, des moyens de rotation conférant au renvoi d'angle une succession de mouvements de rotation séquentielle pour diriger successivement vers le haut la face interne de la première aile, la face interne de la seconde aile, la face externe de la première aile et le face externe de la seconde aile de la têtière en forme d'équerre et, d'autre part, des moyens d'enfilage latéral de certaines pièces à assembler dans le chant transversal du rail de guidage solidaires des deux ailes de la têtière, des moyens de condamnation de basculement intempestif du renvoi d'angle et des moyens de contrôle du déplacement du galet de verrouillage, selon un sens perpendiculaire au sens d'avancement du renvoi d'angle.

Les avantages de l'invention consistent essentiellement en ce que l'assemblage du renvoi d'angle se fait par automatisme, ce qui permet d'augmenter la cadence de l'assemblage, donc de la fabrication du renvoi d'angle et, de ce fait, de diminuer le coût de ce dernier et d'annihiler, au cours de l'assemblage, les risques d'erreurs humaines

L'invention est exposée ci-après plus en détail à l'aide de dessins représentant seulement un mode d'exécution.

- la figure 1 représente une vue en élévation d'un renvoi d'angle

- la figure 2 représente schématiquement la position de la têtière en forme d'équerre à l'entrée de la machine d'assemblage conforme à l'invention

- la figure 3 représente schématiquement la position de la têtière en forme d'équerre du renvoi d'angle avant le début des phases d'assemblage, la face interne de la première aile étant dirigée vers le haut

- la figure 4 représente schématiquement la position de la têtière en forme d'équerre du renvoi d'angle après une première rotation séquentielle, la face interne de la seconde aile étant dirigée vers le haut

- la figure 5 représente schématiquement la position de la têtière en forme d'équerre du renvoi d'angle après une seconde rotation séquentielle, la face externe de la première aile étant dirigée vers le haut

- la figure 6 représente schématiquement la position de la têtière en forme d'équerre du renvoi d'angle après une troisième rotation séquentielle, la face externe de la seconde aile étant dirigée vers le haut

- la figure 7 représente schématiquement la position de la têtière en forme d'équerre du renvoi d'angle après une quatrième rotation séquentielle pour permettre le contrôle dynamique du renvoi d'angle assemblé

- les figures 8a à 8b représentent schématiquement une vue en plan de la machine d'assemblage conforme à l'invention, la figure 8b étant la suite de l'extrémité supérieure de la figure 8a.

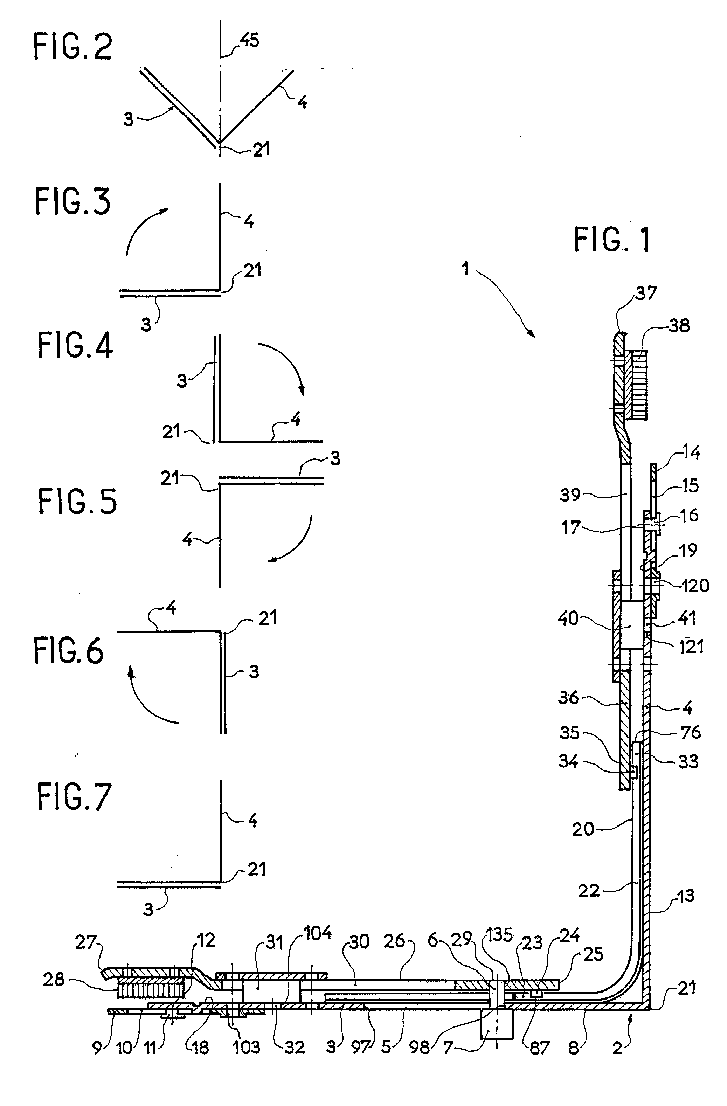

On se réfère à la figure 1.

Le renvoi d'angle 1 comporte une têtière 2 en forme d'équerre, dont les deux ailes 3 et 4 sont perpendiculaires l'une par rapport à l'autre. L'une des ailes 3 dénommée la première aile présente une lumière longitunale 5 permettant le déplacement d'un élément de verrouillage 6 dont le galet de verrouillage 7 fait saillie par rapport à la face externe 8. Sur celle-ci coulisse, selon l'axe longitudinal de la première aile 3, une première plaquette de recouvrement 9 dans laquelle est pratiquée une lumière oblongue 10 pour le passage d'un axe 11 maintenant la première plaquette de recouvrement 9 sur la face externe de la première aile 3 et rendu solidaire de cette dernière par un rivetage 12.

De même, sur la face externe 13 de l'aile 4, dénommée ci-après la seconde aile, coulisse, selon l'axe longitudinal de la seconde aile 4, une seconde plaquette de recouvrement 14 dans laquelle est pratiquée une lumière oblongue 15 pour le passage d'un axe 16 maintenant la seconde plaquette de recouvrement 14 sur la face externe 13 de la seconde aile 4 et rendu solidaire de cette dernière par un rivetage 17.

Sur la face interne 18 de la première aile 3 et sur la face interne 19 de la seconde aile 4 est fixé un rail de guidage 20. Celui-ci présente, à hauteur de l'angle 21 des deux ailes 3, 4 de la têtière 2, une courbure pour faciliter le coulissement dans ledit rail de guidage 20 d'un ensemble élastique 22 formé de plusieurs ressorts lamellaires. L'une des extrémités 23 de cet esemble élastique 22 est rendue solidaire par un axe riveté 24 de l'extrémité 25 d'un premier bras de liaison 26 dont l'extrémité libre 27 est pourvue d'un sabot de liaison 28 permettant de rendre solidaire en translation ledit bras de liaison 26 avec une première tringle de manoeuvre (non représentée). L'élément de verrouillage 6 est rendu solidaire du bras de liaison 26 par un rivetage 29.

Dans le premier bras de liaison 26 est réalisée une lumière oblongue 30 pour le passage d'un premier guide-vis 31 rendu solidaire de la première aile 3 par un rivetage 32.

L'autre extrémité 33 de l'ensemble élastique 22 est rendue solidaire par un axe riveté 34 de l'extrémité 35 d'un second bras de liaison 36 dont l'extrémité libre 37 est pourvue d'un sabot de liaison 38 permettant de rendre solidaire ce dernier d'une seconde tringle de manoeuvre (non représentée). Ainsi, le mouvement de translation de la première tringle de manoeuvre est transmis par l'intermédiaire du premier bras de liaison 26, de l'ensemble élastique 22 et du second bras de liaison 36 à la seconde tringle de manoeuvre.

On pratique dans le second bras de liaison 36 une lumière oblongue 39 pour le passage d'un second guide-vis 40 rendu solidaire de la seconde aile 4 de la têtière 2 par un rivetage 41.

Sur les figures 2 à 7, la première aile 3, pourvue de la lumière oblongue 5, est représentée par deux traits parallèles alors que la seconde aile 4 est schématisée par un trait unique.

Le rappel de la composition du renvoi d'angle a été fait pour faciliter la compréhension de la description de la machine d assemblage 42 conforme à invention et décrite ci-après.

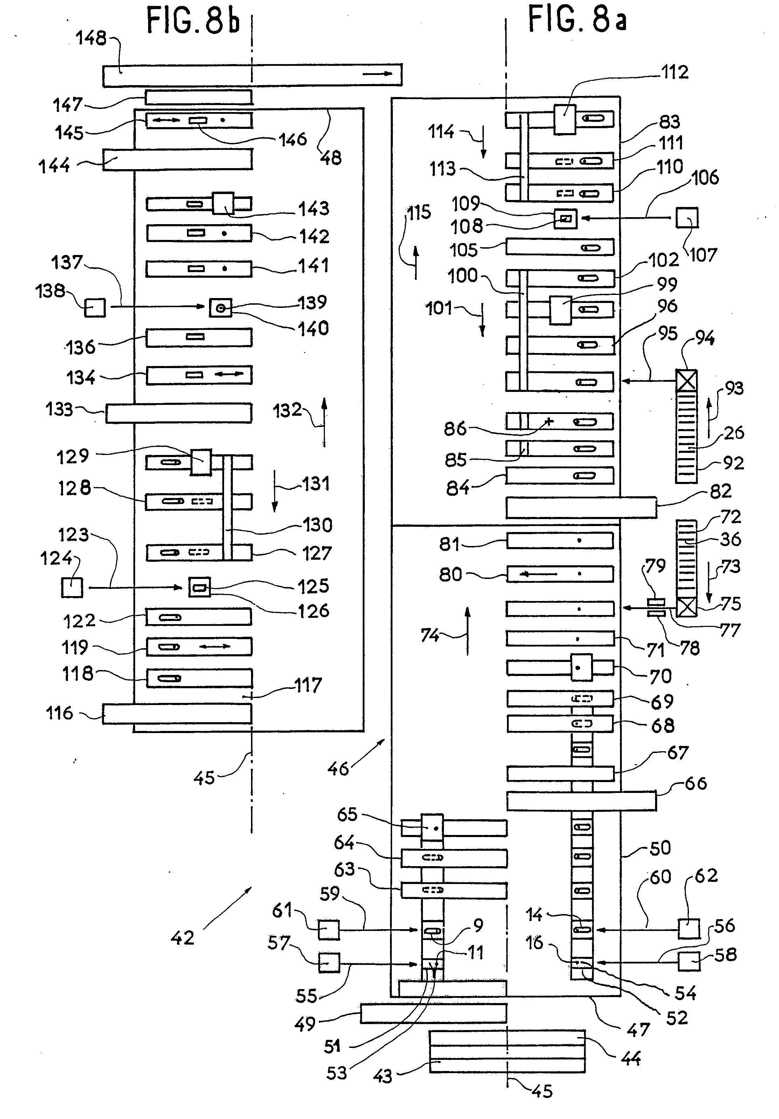

On se réfère, plus particulièrement, d'une part, aux figures 8a et 8b représentant schématiquement la machine d'assemblage 42 et, d'autre part, aux figures 2 à 7 représentant successivement les positions de la têtière 2 au-fur-et-à-mesure du déroulement des différentes phases d'assemblage des différentes pièces du renvoi d'angle 1.

En aval de la machine d'assemblage 42 est disposé un convoyeur d'alimentation 43 sur lequel sont placées, manuellement, les têtières 2 pourvues du rail de guidage 20, la position des têtières pouvant être celle représentée par la figure 2. La seule contrainte est que toutes les têtières soient disposées dans un ordre donné. A cet effet, le convoyeur d'alimentation 43 comporte un dispositif de contrôle 44 vérifiant que la première aile 3, pourvue de la lumière 5, soit toujours disposée du même côté de l'axe 45 qui est, non seulement, l'axe médian du convoyeur d'alimentation 43 mais également l'axe médian de la machine d'assemblage 42.

La machine d' assemblage 42 comprend un transporteur 46 avançant pas-à-pas et assurant l'acheminement du renvoi d'angle 1 depuis l'entrée 47 jusqu'à la sortie 48 de ladite machine d'assemblage 42 et présentant au-fur-et-à-mesure le renvoi d'angle 1 à hauteur d'un poste d'assemblage et/ou d'un ensemble de postes d'assemblage. A l'entrée de cette machine d'assemblage 42 est prévu un manipulateur 49 prélevant la têtière 2 du dispositif d'alimentation 43 pour la disposer sur un premier convoyeur à avance pas-à-pas 50, de sorte que la première aile 3 soit disposée horizontalement, la face interne 18 étant dirigée vers le haut, et que la seconde aile 4 soit verticale et située pratiquement dans l'axe médian 45 de la machine d'assemblage 42 La position de la têtière 2 sur ce premier convoyeur 50 est représentée dans la figure 3.

Ce premier convoyeur 50, acheminant pas-à-pas la têtière 2 disposée d'un côté de l'axe médian 45, comporte des moyens pour la mise en position d'attente et/ou en position active, d'une part, de ladite têtière 2 et, d'autre part, des différentes pièces à assembler. Ces moyens sont des taquets 51, 52 disposés de part et d'autre de l'axe médian 45 et solidaires de moyens d'avancement tels que chaîne, courroie ou analogue. Dans ces taquets 51, 52 sont prévues des rainures pour y loger la première aile 3 de la têtière 2 et des évidements 53, 54. Dans ces évidements 53, 54 sont d'abord disposés, par une première paire de manipulateurs 55, 56, les axes 11 et 16 prélevés par lesdits manipulateurs 55, 56 dans des magasins de stockage 57, 58. Au pas suivant, une seconde paire de manipulateurs 59, 60 prélève dans des magasins de stockage 61, 62 les plaquettes de recouvrement 9 et 14 pour les disposer sur l'axe respectif 11, 16. Au pas suivant, un manipulateur 63 saisit la têtière 2 en position d'attente pour disposer sa première aile 3 sur l'ensemble axe 11 - plaquette de recouvrement 9. Ainsi, la têtière 2 est mise en position active. On prévoit au pas suivant un poste de contrôle 64 vérifiant la présence et la position correcte de la première aile 3 de la têtière 2, de l'axe 11 et de la plaquette de recouvrement 9, puis l'ensemble têtière 2, axe 11 et plaquette de recouvrement 9 est amené sous un poste de rivetage 65 assurant le rivetage 12 (voir figure 1).

Après ce rivetage 12, de la têtière 2 est prise en charge par un premier moyen de rotation 66 conférant à la têtière 2 un mouvement de rotation séquentielle de l'ordre d'un quart de tour pour disposer, horizontalement, la seconde aile 4 de la têtière 2, la face interne 19 de cette seconde aile 4 étant dirigée vers le haut alors que la première aile 3, étant verticale et située pratiquement dans l'axe médian 45 de la machine d'assemblage 2. Cette position de la têtière 2 est représentée dans la figure 4. Ce premier moyen de rotation séquentielle 66 confère à la têtière 2 un mouvement de rotation perpendiculaire à l'avance pas-à-pas du transporteur 46. Le centre de rotation de la têtière 2 est constitué par l'angle 21 formé à la jonction des ailes 3 et 4 de la têtière. Cet angle 21 est pratiquement situé dans le même plan que l'axe médian 45.

Par l'intermédiaire de ce moyen de rotation 66, on repositionne la têtière 2, qui était préalablement en position active sous le poste de rivetage 65, en position d'attente 67 mais maintenant de l'autre côté de l'axe médian 45. Au pas suivant, un manipulateur 68 saisit la têtière 2 en position d'attente pour disposer la seconde aile 4 sur l'ensemble axe 16-plaquette de recouvrement 14. Ainsi, la têtière 2 est mise en position active. Au pas suivant, un poste de contrôle 69 vérifie la présence et la position correcte de la seconde aile 4 de la têtière 2, de l'axe 16 et de la plaquette de recouvrement 14, puis l'ensemble têtière 2, axe 16 et plaquette de recouvrement 14 est amené sous un poste de rivetage 70 assurant le rivetage 17 (voir figure 1).

Pour la suite des opérations d'assemblage, la têtière 2 est mise, au pas suivant, en position d'attente 71.

On dispose sur une première bande d' alimentation 72 dont l'avance 73 est contraire au sens d'avancement pas-à-pas 74 du premier convoyeur 50, le second bras de liaison 36, dont l'extrémité libre 37 est pourvue du sabot de liaison 38 et dont l'autre extrémité 35 est rendue préalablement solidaire, par l'intermédiaire de l'axe riveté 34, de l'extrémité 33 de l'ensemble élastique 22. Ce second bras de liaison 36 est placé perpendiculairement à l'axe médian 45 et de telle manière que l'extrémité libre 23 de l'ensemble élastique 22 soit situé du côté dudit axe médian 45.

Par des moyens de positionnement 75, on dispose le second bras de liaison 36 dans le même alignement latéral que la seconde aile 4 de la têtière 2, de sorte que l'extrémité libre 23 de l'ensemble élastique 20 soit en face du chant 76 (voir figure 1) du rail de guidage 20.

Puis par l'intermédiaire d'un premier moyen d'enfilage constitué par un manipulateur d'enfilage 77, on soumet d'abord au second bras de liaison 36 un mouvement de basculement pour mettre l'ensemble élastique 22 en contact ave des rouleaux 78, 79 d'un dispositif de lubrification pour enduire d'un film de lubrifiant les deux faces de l'ensemble élastique 22 puis, on implique audit second bras de liaison 36 un mouvement de translation pour introduire l'ensemble élastique 22 dans le rail de guidage 20. Au pas suivant, par l'intermédiaire d'un second moyen d 'enfilage constitué par un vérin 80, on positionne exactement l'ensemble élastique 22 dans le rail de guidage 20. Cette position exacte est vérifiée par un poste de contrôle 81.

Après celui-ci, la têtière 2 quitte le premier convoyeur 50. Elle est prise en charge par un second moyen de rotation 82 conférant à la têtière 2 un second mouvement de rotation séquentielle de l'ordre d'un quart de tour dans le même sens que le premier mouvement de rotation séquentielle conféré par le premier moyen de rotation 66. Ce second moyen de rotation 82 prélève la têtière 2 du premier convoyeur 50 pour la disposer sur un second convoyeur à avance pas-à-pas 83, de sorte que la première aile 3 soit à nouveau horizontale mais que la face externe 8 de cette dernière soit dirigée vers le haut et que la seconde aile 4 soit positionnée verticalement vers le bas. Après ce second mouvement de rotation séquentielle, la têtière 2 occupant la position representée dans la figure 5, est mise sur le second convoyeur 83 en position d'attente 84, cette dernière étant située du même côté par rapport à l'axe médian 45 que sur le premier convoyeur 50.

Du fait que la seconde aile 4 est positionnée verticalement vers le bas, on risque un basculement intempestif de la têtière 2. A cet effet, il est nécessaire de prévoir des moyens condamnant ledit basculement intempestif. Un de ces moyens est constitué par une bride 85 enjambant la première aile 3 de la têtière 2.

Au pas suivant, un palpeur 86, traversant la lumière longitudinale 5 de la première aile 3 de la têtière 2, est engagé dans les trous 87 (voir figure 1) des différents ressorts lamellaires de l'ensemble élastique 22. En effet, il est impératif que les trous 87 des différents ressorts lamellaires soient strictement positionnés pour la mise en place de l'axe 24 assurant le lien entre l'ensemble élastique 22 et le premier bras de liaison 26.

Parallèlement au second convoyeur 83 est prévue une seconde bande d'alimentation 92 sur laquelle sont disposés transversalement les premiers bras de liaison 26, le sabot de liaison 28 étant le plus éloigné de l'axe médian 45. L'avance 93 de cette bande d'alimentation 92 est identique au sens d'avance pas-à-pas 74.

Par des moyens de positionnement 94, on dispose le premier bras de liaison 26 dans le même alignement latéral que la première aile 3 de la têtière 2 de sorte que par un manipulateur 95 le premier bras de liaison 26 est mis en position d'attente, l'extrémité 25 de ce premier bras de liaison 26 étant disposée sous l'extrémité libre 23 de l'ensemble élastique 22.

Au pas suivant, on vérifie, par l'intermédiaire d'un poste de contrôle 96, que les trous 87 de l'ensemble élastique 22 soient strictement dans le même plan vertical que l'axe 24 logé dans l'évidement 90 du taquet 91 soumis au même mouvement d avancement pas-à-pas et que ces trous 87 soient situés entre les chants 97, 98 (voir figure 1) de la lumière longitudinale 5 de l'aile 3 de la têtière. Après ce contrôle, la têtière 2 est placée sous un poste de rivetage 99, l'outil de rivetage traversant ladite lumière longitudinale 5. Au cours du transfert de la têtière 2 depuis la position du palpeur 86 jusqu'au poste de rivetage 99, ladite têtière 2 est maintenue par un second moyen de condamnation constitué par un patin de maintien 100 annihilant tout basculement intempestif de la têtière 2. Le patin de maintien 100, soulevé préalablement, est soumis à un déplacement 101 de sens contraire à celui du sens d'avance pas-à-pas 115 du second convoyeur 83, cette avance pas-à-pas étant identique à celle 74 du premier convoyeur 50. De ce fait, dès que la têtière 2 n'est plus maintenue par la bride 85, le patin de maintien 100 prend appui sur la première aile 3 de la têtière 2 et se soulève chaque fois que ladite têtière 2 avance d'un pas.

Après rivetage de l'axe 24, la têtière 2 est amenée à hauteur d'un poste de contrôle 102 vérifiant le libre coulissement de la première plaque de recouvrement 9 et disposant le trou 103 de cette dernière dans le même plan vertical qu'un trou 104 prévu dans la première aile 3 de la têtière 2, ce trou 103 étant destiné à recevoir ultérieurement le têton à riveter du premier guide-vis 31 (pour les repères 103 et 104 voir figure 1).

Au pas suivant, la têtière 2 est mise en position d'attente 105. Simultanément, un manipulateur 106 prélève le premier guide-vis 31 depuis un magasin de stockage 107 et le dispose dans un évidement 108 réalisé dans un taquet 109 solidaire du second convoyeur 83. Puis, après une avance d'un pas, un manipulateur 110 dispose la têtière 2 sur le premier guide-vis 31.

La bonne position et la présence du premier guide-vis 31 et la têtière 2 sont vérifiées par un poste de contrôle 111. Après ce contrôle, la têtière 2 est amenée sous un poste de rivetage 112 procédant au rivetage 32 à tavers le trou 103 de la première plaquette de recouvrement 9.

Au cours du transfert de la têtière 2 depuis sa position d'attente 105 jusqu'au poste de rivetage 112, ladite têtière 2 est maintenue par un troisième moyen de condamnation constitué par un second patin de maintien 113 annihilant tout basculement intempestif de la têtière 2. Comme le patin précédent 100 le second patin de maintien 113, mis préalablement en position haute, est soumis à un déplacement 114 de sens contraire à celui du sens d'avance pas-à-pas 115 du second convoyeur 83. De ce fait, dès que la têtière 2 n'est plus maintenue par le premier patin de maintien 100, elle est prise en charge par le second patin de maintien 113.

Après le rivetage, la têtière 2 est prise en charge par un troisième moyen de rotation 116 conférant à la têtière 2 un troisième mouvement de rotation séquentielle de l'ordre d'un quart de tour dans le même sens que les deux premiers mouvements de rotation séquentielle, tout en prélevant la têtière 2 du second convoyeur 83 pour les disposer sur un troisième convoyeur à avance pas-à-pas 117, ce dernier étant situé par rapport aux convoyeurs 50 et 83 de l'autre côté de l'axe médian 45. Ainsi, la seconde aile 4 de la têtière 2 est à nouveau horizontale mais la face externe 13 est dirigée vers le haut et la première aile 3 est positionnée verticalement vers le bas. Après ce troisième mouvement de rotation séquentielle la têtière 2, occupant la position représentée dans la figure 6, est mise en position d'attente 118 sur le troisième convoyeur 117.

Au pas suivant la têtière 2 est amenée à hauteur d'un poste de contrôle 119 vérifiant le libre coulissement de la seconde plaquette de recouvrement 14 et disposant l'orifice 120 de cette dernière dans le même plan vertical qu'un orifice 121 prévu dans la seconde aile 4 de la têtière 2 et destiné à recevoir le têton à riveter du second guide-vis 40 (pour les repères 120 et 121, voir figure 1).

Puis la têtière 2 est mise en position d'attente 122.

Simultanément, un manipulateur 123 prélève le second guide-vis 40 d'un magasin de stockage 124 et le dispose dans un évidement 125 d'un taquet 126 solidaire du troisième convoyeur 117.

Puis, après une avance d'un pas, un manipulateur 127 place la têtière 2 sur le second guide-vis 40.

La présence du second guide-vis 40 et de la têtière 2 ainsi que la bonne position d'une pièce par rapport à l'autre sont vérifiées par un poste de contrôle 128. Après ce contrôle, la têtière 2 est disposée sous un poste de rivetage 129 procédant au rivetage 41 à travers de l'orifice 120 de la seconde plaquette de recouvrement 14.

Pour cet assemblage, s'étendant depuis la position d'attente 122 jusqu'au poste de rivetage 129, on prévoit un moyen de condamnation de basculement intempestif de la têtière 2 formé par un troisième patin de maintien 130. Ce dernier, mis en position haute en phase de transfert, est soumis à un déplacement 131 de sens contraire à celui du sens d'avance pas-à-pas 132 du troisième convoyeur 117 puis prend appui à nouveau sur la têtière 2 pour maintenir celle-ci sur le second guide-vis 40 jusqu' au rivetage de ce dernier.

Après rivetage, la têtière 2 est prise en charge par un quatrième moyen de rotation 133 conférant à la têtière 2 un quatrième mouvement de rotation séquentielle de l'ordre d'un quart de tour dans le même sens que les trois premiers mouvements de rotation séquentielle. De ce fait, la première aile 3 de la têtière 2 est à nouveau mise en position horizontale et la face interne 18 est dirigée vers le haut. Ladite têtière 2 occupe la position représentée par la figure 7 correspondant à la position représentée par la figure 3. En effet, en raison des différents mouvements successifs de rotation séquentielle de même sens, la têtière 2 a été soumise à une rotation complète. Comme représenté dans les figures 3 à 7, le sens de rotation correspond au sens d'avance des aiguilles d'une montre.

Par un manipulateur 134, on procède à un repositionnement de l'ensemble mobile formé par le premier bras de liaison 26, l'ensemble élastique 22 et le second bras de liaison 36 pour que l'orifice 135 (voir figure 1), dans lequel vient se loger l'axe de l'élément de verrouillage 6 en vue de son rivetage 29, soit apparent dans la lumière longitudinale 5 de la première aile 3 de la têtière 2. Après ce repositionnement la têtière 2 est mise en position d'attente 136. Simultanément, un manipulateur 137 prélève un élément de verrouillage 6 d'un magasin de stockage 138 et le place dans un évidement 139 d'un taquet 140 solidaire du troisième convoyeur 117.

Au pas suivant un manipulateur 141 dispose la têtière 2 sur l'élément de verrouillage 6 puis la têtière 2, pourvue dudit élément de verrouillage 6, est représentée devant un poste de contrôle 142 avant d'être disposée sous un poste de rivetage 143.

Après rivetage, le renvoi d'angle 1, entièrement assemblé, est pris en charge par un manipulateur 144 plaçant le renvoi d'angle 1 sur un poste de contrôle général 145. Celui-ci comporte une semelle pourvue d'une lumière longitudinale 146 dans laquelle est disposé le galet de verrouillage 7 de l'élément de verrouillage 6.

Par le poste de contrôle général 145, on procède en plus d'un contrôle statique, c'est-à-dire un contrôle limité à la présence des différentes pièces, à un contrôle dynamique, c'est-à-dire que l'on confère à l'élément de verrouillage 6, dont le galet 7 traverse la lumière longitudinale 146, un mouvement de va-et-vient en entraînant, par un manipulateur disposé sous ladite semelle, ledit galet 7 pour vérifier le bon fonctionnement du renvoi d'angle. Ce mouvement de va-et-vient est perpendiculaire au sens d'avance du troisième convoyeur 117.

Après ce contrôle général, le renvoi d'angle 1 est transféré par un manipulateur 147 depuis la sortie 48 de la machine d'assemblage 42 sur un convoyeur d'évacuation 148 disposé en aval de cette dernière.

**Revendications**

1. Dispositif d'assemblage des pièces d'un renvoi d'angle (1) composé d'une têtière (2) en forme d'équerre formée de deux ailes (3, 4) perpendiculaires l'une à l'autre, dont l'une (3) présente une lumière longitudinale (5), d'un rail de guidage (20) solidaire des faces internes (18, 19) des deux ailes (3, 4), d'une première et d'une seconde plaquettes de recouvrement (9, 14) rendues, respectivement, solidaires des deux ailes (3, 4) par rivetage d'un premier et d'un second bras de liaison (26, 36) reliés entre eux par un ensemble élastique (22) constitué de plusieurs ressorts lamellaires, d'un premier et d'un second guide-vis (31, 40) rendus solidaires par rivetage, respectivement, des deux ailes (3, 4) de la têtière (2), et d'un élément de verrouillage (6) traversant la lumière longitudinale (5) de l'une (3) des ailes de la têtière (2) et rendu solidaire par rivetage de l'un des bras de liaison (26) caractérisé en ce qu'il comporte des moyens d'assemblage automatique (42) des différentes pièces du renvoi d'angle.

2. Dispositif d'assemblage des pièces d'un renvoi d'angle, caractérisé en ce que les moyens d'assemblage automatique sont une machine d'assemblage (42) comprenant un transporteur (46) avançant pas-à-pas, présentant, au-fur-et-à-mesure, le renvoi d'angle (1) à hauteur d'un poste d'assemblage (70, 75, 94, 99, 112 ...) et/ou d'un ensemble de postes d'assemblage et composé de moyens d'avancement (50, 83, 117), de moyens pour la mise en position d'attente et/ou de mise en position active des différentes pièces (51, 52, 109, 126, 140) solidaires du transporteur avançant pas-à-pas (46), de moyens de déplacement latéral (49, 55, 56, 106, 123, 137), de moyens de rivetage (65, 70, 99, 112, 129, 143) et de moyens de contrôle (44, 69, 81, 86, 96, 102, 111, 119, 128, 142, 145) et comportant, en combinaison avec ces moyens, des moyens de rotation (66, 82, 116, 133) conférant au renvoi d'angle (1) une succession de mouvements de rotation séquentielle pour diriger successivement vers le haut la face interne (18) de la première aile (3), la face interne (19) de la seconde aile (4), la face externe (8) de la première aile (3) et la face externe (13) de la seconde aile (4) de la têtière en forme d'équerre (2), des moyens d'enfilage latéral (77, 88) de certaines pièces à assembler (22, 26, 36) dans le chant transversal (23, 76) du rail de guidage (20) solidaires des deux ailes (3, 4) de la têtière (2), des moyens de condamnation de basculement intempestif (85, 100, 113, 130) du renvoi d'angle (1) et des moyens de contrôle du déplacement (146) de l'élément de verrouillage (6), selon un sens perpendiculaire au sens d'avancement du renvoi d'angle (1).

3. Dispositif d'assemblage des pièces d'un renvoi d'angle selon les revendications 1 et 2, caractérisé en ce que la machine d'assemblage (42) comporte des moyens de rotation séquentielle conférant au renvoi d'angle (1) une succession de rotations séquentielles perpendiculaires à l'avancement pas-à-pas du transporteur (46).

4. Dispositif d'assemblage des pièces d'un renvoi d'angle selon les revendication 1 et 2, caractérisé en ce que le centre des mouvements de rotation séquentielle est pratiquement situé sur l'angle (21) formé par la jonction des ailes (3) et (4) de la têtière (2) du renvoi d'angle (1).

5. Dispositif d'assemblage des pièces d'un renvoi d'angle selon les revendications 1 et 2, caractérisé en ce que les rotations séquentielles successives comportent un sens de rotation continu.

6. Dispositif d'assemblage des pièces d'un renvoi d'angle selon les revendications 1, 2 et 5, caractérisé en ce que les rotations séquentielles successives comportent un sens de rotation identique au sens de rotation des aiguilles d'une montre.

7. Dispositif d'assemblage des pièces d'un renvoi d'angle selon les revendications 1 et 2 caractérisé en ce que les moyens d'enfilage latéral sont :

    a) une bande d'alimentation (72) de sens d'avance contraire au sens d'avancement pas-à-pas (74, 115, 132) du transporteur (46), composé de trois convoyeurs (50, 83, 117) disposés à la suite les uns des autres et soumis à une avance pas-à-pas

    b) d'un manipulateur d'enfilage (77) engageant l'extrémité libre (23) de l'ensemble élastique (22) solidaire du second bras de liaison (36) et situé dans le même alignement latéral que la seconde aile (4) de la têtière (2) mise en position d'attente et,

    c) d'un vérin (80) positionnant exactement l'ensemble élastique (22) dans le rail de guidage (20).

8. Dispositif d'assemblage des pièces d'un renvoi d'angle selon la revendication 7, caractérisé en ce que le manipulateur d'enfilage (77) comporte un mouvement de basculement pour mettre l'ensemble élastique (22) en contact ave un dispositif de lubrification formé de rouleaux (78, 79) entre lesquels passe l'ensemble élastique (22).

9. Dispositif d'assemblage des pièces d'un renvoi d'angle selon les revendications 1 et 2, caractérisé en ce que les moyens de condamnation de basculement intempestif de la têtière (2) sont une bride (85) enjambant une des ailes (3) de la têtière (2) maintenant cette dernière lorsque l'autre aile (4) est positionnée verticalement vers le bas.

10. Dispositif d'assemblage des pièces d'un renvoi d'angle selon les revendications 1 et 2, caractérisé en ce que les moyens de condamnation de basculement intempestif de la têtière (2) sont au moins un patin de maintien (100, 113, 130) soumis à chaque avance pas-à-pas de la têtière (2), à un mouvement de relèvement, à un déplacement (101, 114, 131) de sens contraire à celui de l'avance pas-à-pas de la têtière (2), puis un mouvement d'abaissement pour prendre appui sur l'aile (3, 4) de la têtière (2).

11. Dispositif d'assemblage dès pièces d'un renvoi d'angle selon les revendications 1 et 2, caractérisé en ce que le transporteur à avance pas-à-pas (46) comporte un premier convoyeur à avance pas-à-pas (50) présentant des taquets (51, 52) disposés de part et d'autre de l'axe médian (45) et pourvus d'évidements (53, 54) dans lesquels sont placés, en position d'attente, par une première paire de manipulateur (55, 56), des axes (11) et (16) prélevés dans des magasins de stockage (57, 58) et, par une seconde paire de manipulateurs (59, 60) les plaquettes de recouvrement (9) et (14) prélevées dans des magasins de stockage (61, 62), les manipulateurs (55, 59) et les magasins de stockage (57, 61) étant situés d'un côté de l'axe médian (45) et les manipulateurs (56, 60) et les magasins de stockage (58, 61) étant situés de l'autre côté de l'axe médian (45).

12. Dispositif d'assemblage des pièces de renvoi d'angle selon les revendications 1, 2 et 7, caractérisé en ce que la machine d'assemblage (42) comporte un palpeur (86), traversant la lumière longitudinale (5) d'une de ailes (3) de la têtière (2) et coopérant avec des trous (87) de l'extrémité libre (23) de l'ensemble élastique (22) solidaire d'un des bras de liaison (36) pour repositionner exactement l'ensemble élastique (22) en vue de l'assemblage de cet ensemble élastique (22) avec l'autre bras de liaison (26).

13. Dispositif d'assemblage des pièces d'un renvoi d'angle selon les revendications 1 et 2, caractérisé en ce que la machine d'assemblage (42) comporte un poste de contrôle général (145) assurant, en plus du contrôle statique vérifiant la présence des différentes pièces, un contrôle dynamique pour le fonctionnement de l'ensemble mobile formé par les deux bras de liaison (26, 36) et l'ensemble élastique (22).

14. Dispositif d'assemblage des pièces d'un renvoi d'angle selon la revendication 13, caractérisé en ce que le poste de contrôle général (145) comporte une semelle pourvue d'une lumière longitudinale (146) traversée par le galet de verrouillage (7) de l'élement de verrouillage (6), ce galet de verrouillage (7) étant soumis à un mouvement de va-et-vient perpendiculaire à l'avance pas-à-pas du renvoi d'angle (1) par l'intermédiaire d'un manipulateur disposé sous la semelle.

FIG.2

FIG.3

FIG.4

FIG.5

FIG.6

FIG.7

FIG. 1

EP 0 329 583 A1

FIG.8b  FIG.8a

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A,D | FR-A-2 589 933  (FERCO)<br>* Résumé *<br>--- | 1,2 | B 23 P   21/00<br>E 05 C    9/00 |
| A | DE-A-3 020 453  (WINKHAUS)<br>* Figure 1 *<br>--- | 1 | |
| A | FEINWERKTECHNIK & MEB TECHNIK, vol. 90, no. 6, septembre 1982, pages 71-72, München, DE; J. GAUTSCHI: "Automatische Montage von Manometerwerken"<br>* Page 72, colonne de gauche, lignes 29-32 *<br>----- | 2 | |

**DOMAINES TECHNIQUES RECHERCHES (Int. Cl.4)**

B 23 P
E 05 B
E 05 C

Le présent rapport a été établi pour toutes les revendications

| Lieu de la recherche | Date d'achèvement de la recherche | Examinateur |
|---|---|---|
| LA HAYE | 17-05-1989 | RIS M. |

EPO FORM 1503 03.82 ( P0402)